# EUROPEAN PATENT APPLICATION

(11) **EP 4 738 645 A1**
(43) Date of publication of application: **06.05.2026**
(21) Application number: 25210801.4
(22) Date of filing: 23.10.2025
(51) Int. Cl.: H02J 9/06, H02J 3/32, H02J 3/46, G06F 1/30

(54) **UNINTERRUPTIBLE POWER SUPPLY AND METHOD FOR CONTROL THEREOF**

(30) Priority: 30.10.2024 CN 202411528920
(71) Applicant: Santak Electronic (Shenzhen) Co., Ltd., Guangdong 518101 (CN)
(72) Inventor: ZHENG, DAVID, SHENZHEN, 518101 (CN); HAO, YULONG, SHENZHEN, 518101 (CN); CAO, LEI, SHENZHEN, 518101 (CN); YANG, YUE, SHENZHEN, 518101 (CN)
(74) Representative: Schwan Schorer & Partner mbB

(57) **Abstract**

The present invention provides an uninterruptible power supply, including: an input terminal electrically connectable to an alternating current power supply; an output terminal electrically connectable to a load; a primary branch; and a storage battery branch including a power conversion module and a storage battery; where the power conversion module includes the following operating modes: a charging mode, where when an increment of a load amount of the load is less than a preset threshold, the power conversion module is configured to cause the alternating current power supply to charge the storage battery; and a power supply mode, where when the increment of the load amount is greater than or equal to the preset threshold, the power conversion module is configured to convert a direct current output by the storage battery, so as to supply power to the load cooperatively with the alternating current power supply.

## Description

### TECHNICAL FIELD

The present invention relates to the field of power supplies, and in particular, to an uninterruptible power supply.

### BACKGROUND

The statements in this part are merely intended to provide background information related to the present invention, to help understand the present invention. The background information does not necessarily constitute the prior art.

An uninterruptible power supply (UPS) is a voltage-stable and frequency-stable alternating current power supply that includes a battery and is mainly composed of a rectifier and an inverter. The UPS uses the battery mainly to provide uninterrupted power supply to computer and communication network systems or industrial control systems, industrial devices that require continuous operation, such as computers, servers, storage devices, network devices, and the like, when the power is off. When an input of a mains supply is normal, the UPS stabilizes the voltage of the mains supply and supplies the mains supply to a load for use and to charge the battery at the same time. When the mains supply fails, the UPS provides the electrical energy of the battery to the load, to keep the load operating normally and protect the software and hardware of the load from damage.

Based on its excellent uninterruptible power supply capability, the UPS is widely used in various super-large-scale data centers around the world. In recent years, the power consumption designed for data centers is continuously increasing with rapid application of generative artificial intelligence (Al) in the data centers. When an AI algorithm is not operated by a data center (in this case, the data center is in the "idle-state"), most (e.g., 90%) GPUs (Graphics Processing Unit) are in a sleep state. However, when the AI algorithm is run (in this case, the data center is in the "busy-state "), a power requirement of the data center increases as load increases (e.g., increases by at least 50%). Therefore, how to avoid impact or even faults on an alternating current power grid due to a step increase in load when the data center is powered by the alternating current power grid, and how to ensure reliable operation of the data center and avoid power waste of the data center in the idle-state by using a small generator size when the data center is powered by a generator have become urgent problems to be resolved at present. Therefore, it is necessary to improve the UPS to meet power supply requirements under the step increase in load.

### SUMMARY

Therefore, an objective of the present invention is to overcome the foregoing disadvantages in the prior art, and provide an uninterruptible power supply, including:
an input terminal, configured to be electrically connectable to an alternating current power supply;
an output terminal, configured to be electrically connectable to a load;
a primary branch, including a rectifier module and an inverter module that are electrically connected in sequence between the input terminal and the output terminal; and
a storage battery branch, including a power conversion module and a storage battery, and configured to be electrically connected to a node between the rectifier module and the inverter module;
where the power conversion module is configured to be capable of bidirectionally transmitting and converting a direct current, and includes the following operating modes:
   a charging mode, where, when an increment of a load amount of the load is less than a preset threshold, the power conversion module is configured to cause the alternating current power supply to charge the storage battery; and
   a power supply mode, where, when the increment of the load amount of the load is greater than or equal to the preset threshold, the power conversion module is configured to convert a direct current output by the storage battery, so as to supply power to the load cooperatively with the alternating current power supply.

According to the uninterruptible power supply of the present invention, preferably, a controller is further included, and the controller is configured to perform the following steps:
in the power supply mode, controlling the storage battery and the alternating current power supply to supply power to the load cooperatively and simultaneously controlling an output power of the alternating current power supply to remain unchanged at an instant of a step increase of the load amount in the load; and
then, controlling the output power of the alternating current power supply to gradually increase and controlling a power supplied by the storage battery to gradually decrease until the output power of the alternating current power supply balances with power consumption of the load, and then disabling the power supply mode of the power conversion module.

According to the uninterruptible power supply of the present invention, preferably, a controller is further included, and the controller is configured to perform the following steps:
in the power supply mode, controlling the storage battery and the alternating current power supply to supply power to the load cooperatively and simultaneously controlling an output power of the alternating current power supply to remain unchanged at an instant of a step increase of the load amount of the load; and
then, controlling the output power of the alternating current power supply to gradually increase and controlling a power supplied by the storage battery to gradually decrease until the output power of the alternating current power supply and the power supplied by the storage battery are each within a preset range.

According to the uninterruptible power supply of the present invention, preferably, the power conversion module includes two separate DC-DC converters or the power conversion module is a bidirectional DC-DC converter.

According to the uninterruptible power supply of the present invention, preferably, the preset threshold is greater than or equal to 50% of an initial value of the load amount.

According to the uninterruptible power supply of the present invention, preferably, the inverter module is a bidirectional inverter module.

According to the uninterruptible power supply of the present invention, preferably, a load detection module is further included, where the load detection module is configured to detect the load amount of the load, and output a trigger signal to the power conversion module when the increment of the load amount is greater than or equal to the preset threshold; and the power conversion module switches to the power supply mode based on the received trigger signal.

According to the uninterruptible power supply of the present invention, preferably, the load amount is an electrical parameter of the load.

According to the uninterruptible power supply of the present invention, preferably, the electrical parameter includes a load current.

The present invention further provides a control method for the foregoing uninterruptible power supply, including the following steps:
when the increment of the load amount of the load of the uninterruptible power supply is less than the preset threshold, controlling the power conversion module to cause the alternating current power supply to charge the storage battery; and
when the increment of the load amount of the load is greater than or equal to the preset threshold, controlling the power conversion module to convert the direct current output by the storage battery, so as to supply power to the load cooperatively with the alternating current power supply.

Compared with the prior art, the advantage of the present invention is that a power supply problem when load of a UPS greatly increases, for example, a power supply problem when a step increase in load is caused by running of an AI algorithm in a data center, can be resolved. In the present invention, a charging/discharging module with a capability of bidirectional transmission and direct current conversion is disposed in a UPS. Therefore, when a data center is in the idle-state, an alternating current power supply charges a storage battery through the charging/discharging module; and when the data center is in the busy-state, the storage battery through the charging/discharging module supplies power to a load cooperatively with the alternating current power supply. If the alternating current power supply is a generator, the charging/discharging module can convert a direct current output by the storage battery to supply power to the data center when the output power of the generator is insufficient to meet the power requirement of the data center in the busy-state, which helps the generator ensure reliable operation of the data center in a small volume or size without causing power waste of the data center in the idle-state. If the alternating current power supply is an alternating current power grid, the charging/discharging module can convert the direct current output by the storage battery to supply power to the data center at an instant when the load step increases and an increment of a load amount of the load exceeds a preset threshold, which helps balance the load of the alternating current power grid so that the output power of the alternating current power grid remains stable at an instant of the step increase in the load, thereby avoiding impact or influence on other electrical devices of the alternating current power grid.

### BRIEF DESCRIPTION OF DRAWINGS

The following further describes embodiments of the present invention with reference to the accompanying drawings, where:
FIG. 1 is a schematic diagram of a circuit of a UPS according to an embodiment of the present invention;
FIG. 2 is a schematic diagram of a circuit of a UPS when an increment of a load amount of a load of the UPS is greater than or equal to a preset threshold Th according to an embodiment of the present invention;
FIG. 3 is a schematic diagram of a circuit of a UPS according to another embodiment of the present invention;
FIG. 4 is a circuit topology diagram of an embodiment of the charging/discharging module shown in FIG. 1 or FIG. 2;
FIG. 5 shows a change process of an output power of an alternating current power supply, a power supply power of a storage battery, and a power of a load of a UPS during a period from a time point at which an increment of a load amount of the load of the UPS is greater than or equal to the preset threshold Th to a time point at which the charging/discharging module disables a power supply mode according to an embodiment of the present invention; and
FIG. 6 shows a change process of an output power of an alternating current power supply, a power supply power of a storage battery, and a power of a load of a UPS during a period in which an increment of a load amount of the load of the UPS is greater than or equal to the preset threshold Th according to another embodiment of the present invention.

### DETAILED DESCRIPTION

To make the objectives, technical solutions, and advantages of the present invention clearer, the following further describes the present invention in detail through specific embodiments with reference to the accompanying drawings. It should be noted that the embodiments provided in the present invention are used only for description, and are not intended to limit the protection scope of the present invention.

A UPS usually includes an AC-DC conversion module (rectifier), a DC-AC conversion module (inverter), a storage battery, a DC-DC conversion module (charging module) for charging the storage battery, and a DC-DC conversion module (discharging module) for performing direct current conversion on an output voltage of the storage battery. Generally, when the output of an alternating current power supply is normal, the UPS performs conversion on the alternating current through the rectifier and the inverter and then supplies the current to a load for use, and can charge the storage battery through the charging module at the same time. When the alternating current power supply fails, the UPS provides the electrical energy of the storage battery to the load through the discharging module, to keep the load operating normally and protect the software and hardware of the load from damage.

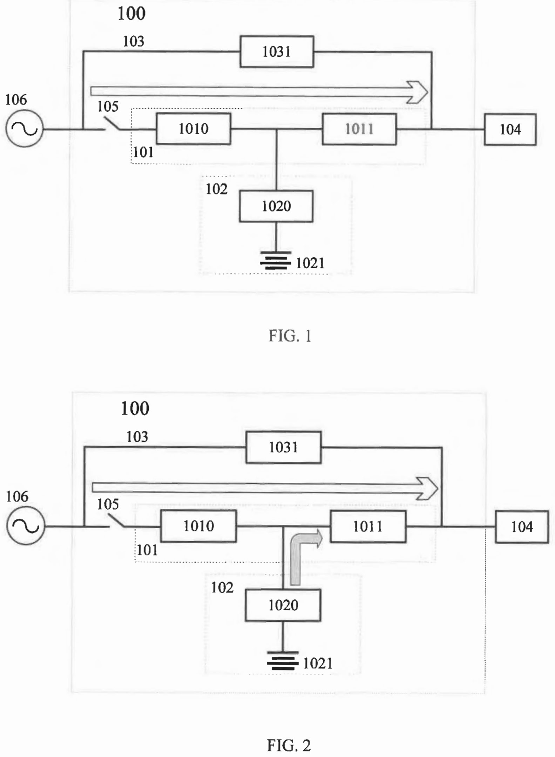

An embodiment of the present invention provides an improved UPS. FIG. 1 shows a schematic diagram of a circuit of the UPS in this embodiment. UPS 100 includes an input terminal, an output terminal, a primary branch 101, a storage battery branch 102, and a bypass branch 103. Wherein, the input terminal of the UPS 100 is configured to be electrically connected to an alternating current power supply 106, and its output terminal is configured to be electrically connected to a load 104. The primary branch 101 includes a rectifier module 1010 and an inverter module 1011 that are sequentially connected between the input terminal and the output terminal of the UPS 100. Preferably, the UPS 100 further includes a primary input switch 105, and the primary input switch 105 is connected in series between the input terminal of the UPS 100 and the rectifier module 1010. The storage battery branch 102 includes a charging/discharging module (also referred to as a power conversion module) 1020 and a storage battery 1021. The storage battery branch 102 is configured to be electrically connected to a node between the rectifier module 1010 and the inverter module 1011. The bypass branch 103 includes a bypass switch 1031 and is configured to be connected in parallel with the primary branch 101.

The primary input switch 105 is configured to control conduction and disconnection between the alternating current power supply 106 and the primary branch 101. The rectifier module 1010 is configured to convert an input alternating current into a direct current and provide the direct current to the inverter module 1011. The inverter module 1011 is configured to convert the input direct current into an alternating current and provide the alternating current to the load 104. The bypass switch 1031 is used to control switching between the primary branch 101 and the bypass branch 103. Preferably, the bypass switch 1031 is a static switch. The charging/discharging module 1020 is configured to be capable of bidirectionally transmitting and converting a direct current, and includes a charging mode and a power supply mode. Wherein, when switching to the charging mode, the charging/discharging module 1020 is configured to perform direct current conversion on part of a direct current output by the rectifier module 1010 to charge the storage battery 1021; when switching to the power supply mode, the charging/discharging module 1020 is configured to perform direct current conversion on a direct current output by the storage battery 1021 to provide to the inverter module 1011. The inverter module 1011 is configured to convert the input direct current into an alternating current, and provide the alternating current to the load 104.

In an embodiment of the present invention, the alternating current power supply 106 is an alternating current power grid (for example, a mains supply), and the UPS supplies power to a data center. Data centers are the core of the modern information technology infrastructure and support key business applications such as customer relationship management, enterprise resource planning, and supply chain management systems. Components of a data center include a server, a storage device, a network device, cooling and power supply devices, and monitoring and management systems. The main functions of the data center include data storage, data processing, data network, data security, and data backup and recovery. When the data center switches an operation scale (for example, switching from a small-scale operation to a large-scale operation, such as switching from a conventional operation to an AI operation), a power supply requirement for the UPS also increases accordingly. In this embodiment, the charging/discharging module 1020 of the UPS implements bidirectional transmission and direct current conversion. When the data center is in the idle-state, the alternating current power supply 106 supplies power to the data center through the primary branch 101, and charges the storage battery 1021 through the charging/discharging module 1020 at the same time. When the data center is in the busy-state, if an increment of a load amount of a load of the data center is greater than or equal to a preset threshold Th, the charging/discharging module 1020 of the storage battery 1021 switches to the power supply mode, and supplies power to the load cooperatively with the alternating current power supply 106. In particular, in a case of a step increase in the load of the data center, at an instant when the increment of the load amount is greater than or equal to the preset threshold Th, the charging/discharging module 1020 switches to the power supply mode, and converts the direct current output by the storage battery 1021 to supply power to the data center cooperatively with the alternating current power supply 106. Specifically, when an output power of the alternating current power supply 106 gradually increases to meet the power requirement of the data center, the power supply of the battery 1021 is cut off. In this way, the output power of the alternating current power grid remains stable at an instant of the step increase in the load, thereby avoiding impact or other adverse effects of a load sudden change on other electrical devices of the alternating current power grid.

In addition, this embodiment is also applicable to a case in which a power supply capability of the alternating current power grid is insufficient. For example, in a peak period of power consumption in summer, when the output power of the alternating current power grid cannot meet the power requirement of the data center, the charging/discharging module 1020 of the UPS may be switched to the power supply mode, so that the battery 1021 supplies power to the data center cooperatively with the alternating current power supply 106 to maintain normal operation of the data center.

In the embodiments of the present invention, the step increase means that the load amount suddenly increases from one value to another at a moment. Typically, this sudden change occurs within a short time period. Preferably, the short time period is 20 ms, more preferably 15 ms, 10 ms, 5 ms, 3 ms, or 1 ms.

In another embodiment of the present invention, the alternating current power supply 106 is a generator, and the UPS supplies power to the data center. The charging/discharging module 1020 of the UPS implements bidirectional transmission and direct current conversion. When the data center is in the idle-state, the generator supplies power to the data center through the primary branch 101, and charges the storage battery 1021 through the charging/discharging module 1020 at the same time. When the data center is in the busy-state, if an output power of the generator is insufficient to meet the power requirement of the data center, for example, if the increment of the load amount of the load of the data center is greater than or equal to the preset threshold Th, the charging/discharging module 1020 switches to the power supply mode, and supplies power to the increased load together with the generator. In this way, the generator can ensure reliable operation of the data center in a small volume or size without causing power waste of the data center in the idle-state. Similarly, in a case of the step increase in the load, this embodiment may also prevent the sudden increased load from affecting the generator.

In the embodiments of the present invention, the preset threshold Th is related to an initial value of the load amount, for example, is in direct proportion to the initial value of the load amount, and may be selected and set based on an actual operating condition. Preferably, the preset threshold Th is not less than 50% of the initial value of the load amount, more preferably, is not less than 70% of the initial value of the load amount.

The following describes an operating principle of the UPS 100 with reference to FIG. 1 and FIG. 2 by using an example in which the alternating current power supply 106 is an alternating current power grid.

When an increment of a load amount of a load of the UPS is less than the preset threshold Th, an alternating current output by the alternating current power supply 106 is input to the rectifier module 1010 through the primary input switch 105, and the rectifier module 1010 converts the input alternating current into a direct current and outputs the direct current to the inverter module 1011. The inverter module 1011 converts the input direct current into an alternating current and provides the alternating current to the load 104, to supply power to the load 104. At the same time, the charging/discharging module 1020 switches to the charging mode, and performs a DC-DC conversion on part of a direct current output by the rectifier module 1010 to charge the storage battery 1021.

When the increment of the load amount of the load of the UPS is greater than or equal to the preset threshold, the alternating current output by the alternating current power supply 106 is input to the rectifier module 1010 through the primary input switch 105, and the rectifier module 1010 converts the input alternating current into a direct current and outputs the direct current to the inverter module 1011. The inverter module 1011 converts the input direct current into an alternating current and provides the alternating current to the load 104, to supply power to the load 104. At the same time, at an instant when the increment of the load amount is greater than or equal to the preset threshold, the charging/discharging module 1020 switches to the power supply mode, and performs direct current conversion on the direct current output by the storage battery 1021 to provide to the inverter module 1011, and the inverter module 1011 converts the input direct current into an alternating current and provides the alternating current to the load 104. That is, the storage battery 1021 and the alternating current power supply 106 jointly supply power to the load 104.

When the alternating current power supply 106 fails, it cannot output electrical energy to supply power to the load 104. In this case, the charging/discharging module 1020 switches to the power supply mode, and performs direct current conversion on the direct current output by the storage battery 1021 to provide to the inverter module 1011. The inverter module 1011 converts the input direct current into an alternating current and provides the alternating current to the load 104.

When the UPS 100 fails, the bypass switch 1031 is closed, the alternating current power supply 106 supplies power to the load 104 through the bypass branch 103, and the current does not flow through the primary branch 101 or the storage battery branch 102.

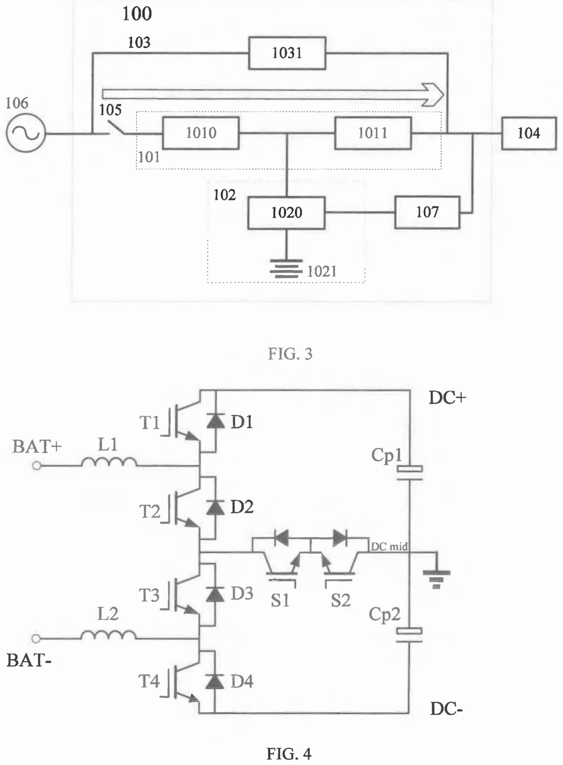

In some embodiments of the present invention, as shown in FIG. 3, the UPS 100 further includes a load detection module 107. An input terminal of the load detection module 107 is electrically connected to a node between the inverter module 1011 and the load 104, and an output terminal of the load detection module is electrically connected to the charging/discharging module 1020. The load detection module 107 is configured to detect the load amount (for example, an electrical parameter) of the load 104. Preferably, the load detection module 107 is configured to detect a load current. When the load current increases to be greater than or equal to the preset threshold Th, the load detection module 107 is configured to output a trigger signal, and the charging/discharging module 1020 switches to the power supply mode based on the received trigger signal.

In some embodiments of the present invention, the charging/discharging module 1020 includes two DC-DC converters, which are respectively used for charging the storage battery and discharging the storage battery. Circuit topologies and the operating principle of DC-DC converters are well-known in the art, and details are not described herein again.

In some embodiments of the present invention, the charging/discharging module 1020 is a bidirectional DC-DC converter. FIG. 4 shows a circuit topology of an embodiment of the charging/discharging module 1020 shown in FIG. 1 or FIG. 2. As shown in FIG. 4, the bidirectional DC-DC converter includes inductors L1 and L2, switching transistors T1, T2, T3, and T4, diodes D1, D2, D3, and D4, switching transistors S1 and S2, and capacitors Cp1 and Cp2. Because the operating principle of the bidirectional DC-DC converter is well-known in the art, details are not described herein again. The circuit topology of the bidirectional DC-DC converter shown in FIG. 4 is exemplary rather than limiting, and all bidirectional DC-DC converters well-known to persons skilled in the art can be applied to the present invention.

In some embodiments of the present invention, the rectifier module 1010 is a bidirectional rectifier module, and the inverter module 1011 is a bidirectional inverter module. The bidirectional rectifier and the bidirectional inverter used in the embodiments of the present invention can provide flexibility of energy flow control, and meet complex power requirements of customers. In an embodiment, the load is an energy regeneration load. When the energy regeneration load is unloaded, the load can return energy to the storage battery 1021 to charge the storage battery through the inverter module 1011 and the charging/discharging module 1020, or return energy to the alternating current power grid through the inverter module 1011 and the rectifier module 1010.

In an embodiment, when the load is unloaded, to prevent the output power of the alternating current power supply 106 from being directly reduced to zero to cause impact on the system, the output power of the alternating current power supply 106 may be controlled to be gradually reduced to zero. During this process, the alternating current output by the alternating current power supply 106 can no longer be provided to the load, but the storage battery 1021 can be charged through the rectifier module 1010 and the charging/discharging module 1020.

In some embodiments of the present invention, to ensure power usage safety, the charging/discharging module 1020 needs to disable the charging mode before switching to the power supply mode, and vice versa.

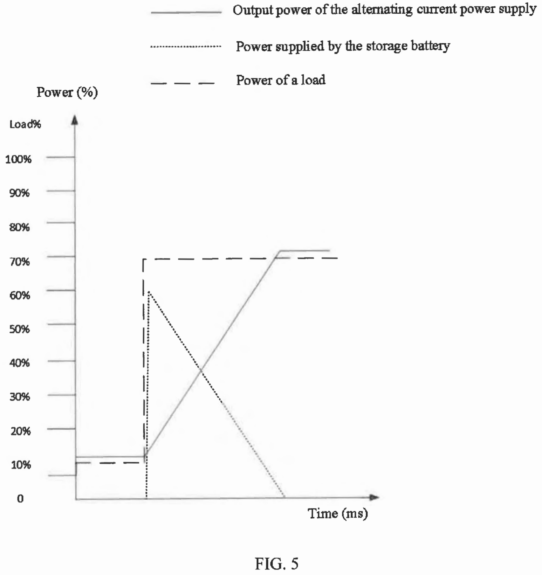

An embodiment of the present invention further provides a control method for the UPS 100 shown in FIG. 3. First, the load detection module 107 is controlled to detect a load current Iload. When an increment of the load current Iload is less than the preset threshold Th, the rectifier module 1010 and the inverter module 1011 are controlled to perform rectification, inversion, and voltage stabilization on the alternating current output by the alternating current power supply 106, and then output the alternating current to the load 104 to supply power to the load. At the same time, the charging/discharging module 1020 is controlled to switch to the charging mode, performing DC-DC conversion on part of the direct current output by the rectifier module 1010 to charge the storage battery 1021. When the increment of the load current Iload is greater than or equal to the preset threshold Th, the load detection module 107 is controlled to output a trigger signal, and the trigger signal controls the charging/discharging module 1020 to switch to the power supply mode, performing direct current conversion on the direct current output by the storage battery 1021, and the direct current output by the charging/discharging module 1020 is converted and stabilized through the inverter module 1011 before providing to the load 104. At the same time, the output power and the output current of the alternating current power supply 106 remain unchanged. That is, the primary branch 101 and the storage battery branch 102 are controlled to jointly supply power to the load 104. Preferably, after this, the output power of the alternating current power supply 106 is controlled to gradually increase and the power supply power of the battery 1021 is controlled to gradually decrease at the same time, until the output power of the alternating current power supply 106 and the power consumption of the load 104 reach an energy balance, and then the charging/discharging module 1020 is controlled to disable the power supply mode. In particular, in a case of a step increase in the load current Iload, at an instant when the increment of the load current Iload is greater than or equal to the preset threshold Th, because the storage battery 1021 is controlled to participate in supplying power, the output current of the alternating current power supply 106 is prevented from instantaneously becoming large with the step increase of the load current Iload, thereby avoiding impact on other electrical devices. FIG. 5 shows a change process of the output power of the alternating current power supply 106, the power supplied by the storage battery 1021, and the power of the load during a period from a time point at which the increment of the load current of this embodiment is greater than or equal to the preset threshold Th to a time point at which the charging/discharging module 1020 disables the power supply mode. In addition, the foregoing control method may further implement energy balance on the premise of ensuring system stability, by controlling the output power of the alternating current power supply 106 to gradually increase at a specified speed.

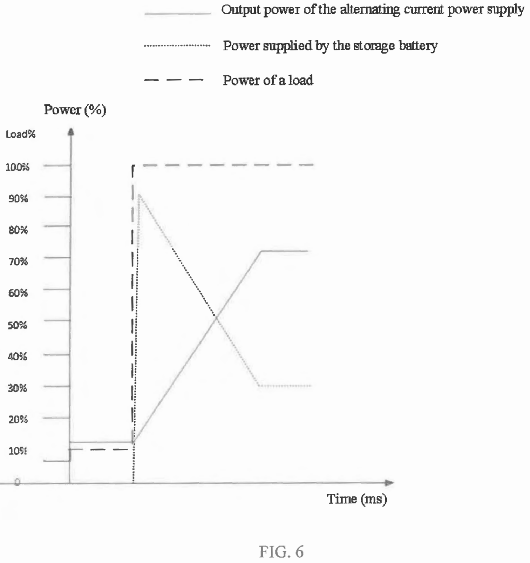

An embodiment of the present invention further provides another control method for the UPS 100. Wherein, at an instant when the increment of the load current Iload is greater than or equal to the preset threshold Th, the storage battery branch 1021 is controlled to supply power to the increased load, and the output power and the output current of the alternating current power supply 106 remain unchanged. Then, the output power of the alternating current power supply 106 is controlled to gradually increase and the power supplied by the storage battery 1021 is controlled to gradually decrease at the same time, until the output current of the alternating current power supply 106 and the power supply current of the storage battery 1021 fall within a preset range. Compared with the control method in the previous embodiment, in this control method, the alternating current power supply 106 and the storage battery 1021 are maintained to jointly supply power during the step increase in the load, but the power supply ratio between the alternating current power supply and the storage battery is more reasonable by means of control. For example, when the alternating current power supply 106 is a generator, in this control method, a power generation capability of the generator can be more appropriately used, and a discharging speed of the storage battery 1021 can be reduced at the same time, thereby prolonging a power supply time. In this embodiment, the foregoing preset range may be selected based on the actual operating condition of the system. For example, power supply currents of the two are controlled, so that the alternating current power supply 106 and the storage battery 1021 each undertake 50% of the increment of the load amount. FIG. 6 shows a change process of the output power of the alternating current power supply, the power supplied by the storage battery, and the power of the load in this embodiment.

By means of the foregoing specific embodiments of the present invention, a power supply problem when load of a UPS greatly increases, for example, a power supply problem when a step increase in load is caused by running of an AI algorithm in a data center, can be resolved. In the present invention, a charging/discharging module with a capability of bidirectional transmission and direct current conversion is disposed in a UPS. Therefore, when a data center is in the idle-state, an alternating current power supply charges a storage battery through the charging/discharging module; and when the data center is in the busy-state, the storage battery through the charging/discharging module supplies power to a load cooperatively with the alternating current power supply. If the alternating current power supply is a generator, the charging/discharging module can convert a direct current output by the storage battery to supply power to the data center when the output power of the generator is insufficient to meet a power requirement of the data center in the busy-state, which helps the generator ensure reliable operation of the data center in a small volume or size without causing power waste of the data center in the idle-state. If the alternating current power supply is an alternating current power grid, the charging/discharging module can convert the direct current output by the storage battery to supply power to the data center at an instant when the load step increases and an increment of a load amount of the load exceeds a preset threshold, which helps balance the load of the alternating current power grid so that the output power of the alternating current power grid remains stable at an instant of the step increase in the load, thereby avoiding impact or influence on other electrical devices of the alternating current power grid.

According to another embodiment of the present invention, the UPS 100 further includes a controller. The controller is configured to control the uninterruptible power supply by using the control method described above.

Although the embodiments of the present invention are described in a background of a data center, the description is illustrative rather than limiting. The embodiments of the present invention are also applicable to power supply systems in other scenarios, such as a hospital.

Although the present invention has been described by using preferred embodiments, the present invention is not limited to the embodiments described herein, and includes various changes and variations without departing from the scope of the present invention.

## Claims

1. An uninterruptible power supply, comprising:
an input terminal, configured to be electrically connectable to an alternating current power supply;
an output terminal, configured to be electrically connectable to a load;
a primary branch, comprising a rectifier module and an inverter module that are electrically connected in sequence between the input terminal and the output terminal; and
a storage battery branch, comprising a power conversion module and a storage battery, and configured to be electrically connected to a node between the rectifier module and the inverter module;
wherein the power conversion module is configured to be capable of bidirectionally transmitting and converting a direct current, and comprises the following operating modes:
a charging mode, wherein, when an increment of a load amount of the load is less than a preset threshold, the power conversion module is configured to cause the alternating current power supply to charge the storage battery; and
a power supply mode, wherein, when the increment of the load amount of the load is greater than or equal to the preset threshold, the power conversion module is configured to convert a direct current output by the storage battery, so as to supply power to the load cooperatively with the alternating current power supply.

2. The uninterruptible power supply according to claim 1, further comprising a controller, the controller is configured to perform the following steps:
in the power supply mode, controlling the storage battery and the alternating current power supply to supply power to the load cooperatively and simultaneously controlling an output power of the alternating current power supply to remain unchanged at an instant of a step increase of the load amount in the load; and
then, controlling the output power of the alternating current power supply to gradually increase and controlling a power supplied by the storage battery to gradually decrease until the output power of the alternating current power supply balances with power consumption of the load, and then disabling the power supply mode of the power conversion module.

3. The uninterruptible power supply according to claim 1, further comprising a controller, the controller is configured to perform the following steps:
in the power supply mode, controlling the storage battery and the alternating current power supply to supply power to the load cooperatively, and simultaneously controlling an output power of the alternating current power supply to remain unchanged at an instant of a step increase of the load amount in the load; and
then, controlling the output power of the alternating current power supply to gradually increase and controlling a power supplied by the storage battery to gradually decrease until the output power of the alternating current power supply and the power supplied by the storage battery each are within a preset range.

4. The uninterruptible power supply according to any one of claims 1 to 3, the power conversion module comprises two separate DC-DC converters or the power conversion module is a bidirectional DC-DC converter.

5. The uninterruptible power supply according to any one of claims 1 to 3, wherein the preset threshold is greater than or equal to 50% of an initial value of the load amount.

6. The uninterruptible power supply according to any one of claims 1 to 3, wherein the inverter module is a bidirectional inverter module.

7. The uninterruptible power supply according to any one of claims 1 to 3, further comprising a load detection module, wherein the load detection module is configured to detect the load amount of the load, and output a trigger signal to the power conversion module when the increment of the load amount is greater than or equal to the preset threshold; and the power conversion module switches to the power supply mode based on the received trigger signal.

8. The uninterruptible power supply according to claim 7, wherein the load amount is an electrical parameter of the load.

9. The uninterruptible power supply according to claim 8, wherein the electrical parameter comprises a load current.

10. A control method for the uninterruptible power supply according to any one of claims 1 to 9, comprising the following steps:
when the increment of the load amount of the load of the uninterruptible power supply is less than the preset threshold, controlling the power conversion module to cause the alternating current power supply to charge the storage battery; and
when the increment of the load amount of the load is greater than or equal to the preset threshold, controlling the power conversion module to convert the direct current output by the storage battery, so as to supply power to the load cooperatively with the alternating current power supply.
